# EUROPÄISCHE PATENTSCHRIFT

(11) **EP 3 564 023 B1**
(45) Veröffentlichungstag und Bekanntmachung des Hinweises auf die Patenterteilung: **02.12.2020**
(21) Anmeldenummer: 18000429.3
(22) Anmeldetag: 04.05.2018
(51) Int. Cl.: B29D 15/00, F16H 55/06

(54) **GETRIEBERAD, VERFAHREN ZU SEINER HERSTELLUNG UND GETRIEBE MIT EINEM SOLCHEN GETRIEBERAD**
GEAR WHEEL, METHOD FOR ITS PREPARATION AND TRANSMISSION COMPRISING SUCH A GEAR WHEEL
ROUE D'ENGRENAGE, SON PROCÉDÉ DE FABRICATION ET ENGRENAGE DOTÉ D'UNE TELLE ROUE D'ENGRENAGE

(43) Veröffentlichungstag der Anmeldung: 06.11.2019
(73) Patentinhaber: FRAUNHOFER-GESELLSCHAFT zur Förderung der angewandten Forschung e.V., 80686 München (DE)
(72) Erfinder: Pretsch, Thorsten, 12207 Berlin (DE)
(74) Vertreter: Lichti - Patentanwälte Partnerschaft mbB

(56) Entgegenhaltungen:
- EP-A2- 0 152 279
- DE-A1-102007 010 564
- DE-A1-102011 001 917

## Beschreibung

Die Erfindung betrifft ein Getrieberad, welches zumindest in seinem Umfangsbereich aus wenigstens einem plastifizierbaren Polymer gebildet ist, ein Getriebe mit wenigstens einem solchen Getrieberad sowie ein Verfahren zur Herstellung eines Getrieberades der vorgenannten Art.

Getrieberäder finden insbesondere in Form von Zahn- und Schneckenrädern in unterschiedlicher Ausgestaltung verbreitet Verwendung, so beispielsweise in Form von im Wesentlichen zylindrischen Zahnrädern mit um ihren Umfang verteilten Zähnen, wobei der zylindrische Körper solcher Zahnräder nicht notwendigerweise kreiszylindrisch sein muss, sondern bei Ellipsenrädern beispielsweise auch oval ausgestaltet sein kann. Ferner sind Getrieberäder z.B. in Form von Kegel- oder Kronenrädern mit einem im Wesentlichen kegeligen oder kegelstumpfförmigen Körper mit um deren Umfang verteilten Zähnen bekannt. Darüber hinaus finden Getrieberäder verbreitet in Form von Schneckenrädern Verwendung, welche im Wesentlichen nach Art von Zahnstangen mit an deren zylindrischen Mantelfläche angeordnetem Gewinde ausgebildet sind. Derartige Getrieberäder sind üblicherweise aus Metallwerkstoffen, aber auch aus Kunststoffen, seien sie thermoplastisch oder seien sie duroplastisch, gefertigt.

Derartige Getrieberäder kommen in verschiedenartigen Getrieben zum Einsatz, welche zur Übertragung eines Drehmomentes zwischen bewegten Teilen dienen und entweder in einen motorischen Antrieb, wie z.B. einen Elektromotor, Hydraulikmotor und dergleichen, intergiert sein oder als separates Getriebe ausgestaltet sein können. Dabei ist es häufig erwünscht, mittels des Getriebes für ein schnelles Ab- und/oder Einschalten eines von dem Getriebe angetriebenen Prozesses zu sorgen, z.B. im Falle einer Störung, wenn der Antrieb abrupt von dem Prozess entkoppelt oder ein zusätzlicher Prozess initiiert werden muss. Dies geschieht gegenwärtig in der Regel mittels entsprechender elektronischer Steuer- und/oder Regeleinrichtungen der Antriebe selbst und/oder mittels Sensoren, wie beispielsweise Temperatursensoren, mittels welcher z.B. im Falle einer Überhitzung ein Arbeitsprozess unterbrochen und/oder ein Kühlprozess in Gang gesetzt werden kann. Ferner finden verbreitet mechanische Kupplungen Verwendung, welche mit dem entsprechenden Getriebe in bzw. außer Eingriff gebracht werden können.

Der Erfindung liegt die Aufgabe zugrunde, ein Getrieberad der eingangs genannten Art sowie ein hiermit ausgestattetes Getriebe in einfacher und kostengünstiger Weise dahingehend weiterzubilden, dass es als Steuerelement zum Ab- und/oder Zuschalten von mittels des Getriebes angetriebenen Prozessen zu dienen vermag. Sie ist ferner auf die Herstellung eines solchen Getrieberades gerichtet.

Erfindungsgemäß wird diese Aufgabe bei einem Getrieberad, welches zumindest in seinem Umfangsbereich aus wenigstens einem plastifizierbaren Polymer gebildet ist, dadurch gelöst, dass es sich bei dem wenigstens einen plastifizierbaren Polymer um wenigstens ein thermoplastisches Polymer mit Formgedächtniseigenschaften und/oder mit thermoresponsiven Eigenschaften handelt, welches Schaltsegmente und diese miteinander verbindende Netzpunkte aufweist, wobei das Polymer mittels Verformung aus einer permanenten Form in eine temporäre Form programmierbar und mittels Erwärmung zumindest auf die Schalttemperatur aus der temporären Form in die permanente Form zurück verformbar ist, und wobei das Polymer derart programmiert ist, dass das Getrieberad
- die permanente Form eines Zahn- oder Schneckenrades aufweist und in der temporären Form zumindest einen im Wesentlichen in Form eines Zylinders, Kegels oder Kegelstumpfes ausgestalteten Umfangsabschnitt besitzt; und/oder
- in der permanenten Form zumindest einen im Wesentlichen in Form eines Zylinders, Kegels oder Kegelstumpfes ausgestalteten Umfangsabschnitt besitzt und die temporäre Form eines Zahn- oder Schneckenrades aufweist.

Zur Lösung dieser Aufgabe sieht die Erfindung ferner ein Getriebe mit wenigstens einem Getrieberad der vorgenannten Art vor.

In verfahrenstechnischer Hinsicht sieht die Erfindung schließlich überdies ein Verfahren zur Herstellung eines solchen Getrieberades vor, welches die folgenden Schritte umfasst:
(a) Bereitstellen des Getrieberades
   - in der permanenten Form eines Zahn- oder Schneckenrades, oder
   - in der permanenten Form mit zumindest einem im Wesentlichen in Form eines Zylinders, Kegels oder Kegelstumpfes ausgestalteten Umfangsabschnitt; und
(b) Programmieren des wenigstens einen thermoplastischen Polymers mit Formgedächtniseigenschaften und/oder mit thermoresponsiven Eigenschaften, indem das Getrieberad
   - aus der permanenten Form eines Zahn- oder Schneckenrades in die temporäre Form mit zumindest einem im Wesentlichen in Form eines Zylinders, Kegels oder Kegelstumpfes ausgestalteten Umfangsabschnitt verformt wird, oder
   - aus der permanenten Form mit zumindest einem im Wesentlichen in Form eines Zylinders, Kegels oder Kegelstumpfes ausgestalteten Umfangsabschnitt in die temporäre Form eines Zahn- oder Schneckenrades verformt wird.

Bei thermoplastischen Formgedächtnispolymeren handelt es sich um thermoplastische und folglich plastifizierbare Polymere, welche üblicherweise aus wenigstens zwei Polymerkomponenten oder insbesondere aus einer Polymerkomponente mit verschiedenen Segmenten bestehen. Dabei handelt es sich einerseits um "harte" Segmente, welche auch als Netzpunkte fungieren. Andererseits handelt es sich um "weiche" Segmente, welche die Netzpunkte miteinander verbinden und auch als Schaltsegmente bezeichnet werden und bei erhöhten Temperaturen elastisch sind (sie liegen in diesem Fall in amorpher Form vor), während sie bei niedrigeren Temperaturen starr sind (sie liegen in diesem Fall in teilkristalliner oder verglaster Form vor). Bei den hier in Frage stehenden thermoplastischen Polymeren mit Formgedächtnis- und/oder mit thermoresponsiven Eigenschaften handelt es sich bei den Bindungen zwischen den Schalt- bzw. Weichsegmenten und den Hartsegmenten bzw. den Netzpunkten nicht um chemisch kovalente Bindungen, sondern um physikalische Bindungen. Derartige Polymere lassen sich hinsichtlich ihrer Formgebung programmieren, indem sie auf eine Temperatur erwärmt werden, welche wenigstens der sogenannten Schalttemperatur entspricht, bei welcher der Phasenübergang (Glasübergang bzw. Schmelzübergang) der Weich- bzw. Schaltsegmente stattfindet. Bei einer solchen Temperatur wird das Polymer dann verformt, wonach es auf seine sogenannte Formfixierungstemperatur abgekühlt wird, welche der Kristallisationstemperatur bzw. Glasübergangstemperatur der Weich- oder Schaltsegmente entspricht und im Bereich der Schalttemperatur liegen kann, aber demgegenüber üblicherweise zumindest etwas geringer ist. Die Weich- bzw. Schaltsegmente liegen dann wieder in teilkristalliner bzw. verglaster Form vor, so dass die Formgebung erhalten bleibt. Diese Formgebung ist indes insoweit nur temporär, als wenn ein solchermaßen "programmiert" mechanisch verformtes Formgedächtnispolymer auf eine bestimmte Temperatur, nämlich auf seine Schalttemperatur, erwärmt wird, die weichen Segmente (Schaltsegmente) wieder in ihre amorphe Form überführt werden, so dass sie dem durch die harte Komponente (Netzpunkte) induzierte Rückstellkraft nicht mehr entgegenwirken können und das Formgedächtnispolymer wieder seine ursprünglich Form einnimmt, die mechanische Verformung also "rückgängig" gemacht wird. Ferner besteht oft auch die Möglichkeit einer Programmierung durch Kaltverformung, indem die Polymere bei einer Temperatur unterhalb ihrer Schalttemperatur, z.B. bei Umgebungstemperatur, verformt werden und gegebenenfalls, sofern die Formfixierungstemperatur demgegenüber geringer ist, auf ihre Formfixierungstemperatur abgekühlt werden. Auch in diesem Fall findet insoweit eine nur temporäre Verformung statt, als bei einer abermaligen Erwärmung zumindest auf die Schalttemperatur, um die weichen Segmente (Schaltsegmente) in die amorphe Phase zu überführen und dabei die anlässlich der Kaltverformung induzierten mechanischen Spannungen zu relaxieren, eine Rückverformung stattfindet.

Neben einem solchen Formgedächtnis können thermoresponsive Polymere auch ein Temperaturgedächtnis aufweisen. Hierunter wird verstanden, dass bei einem Auslösen des Formgedächtniseffektes die Formrückstellung etwa bei derjenigen Temperatur einsetzt, bei welcher zuvor die mechanische Verformung in das Material eingebracht worden ist. Ein derartiges Materialverhalten weisen beispielsweise Polymere mit semikristallinen Netzwerkstrukturen auf, wie thermoplastische Polyurethan-Elastomere (N. Fritzsche, T. Pretsch in Macromolecules 47, 2014, 5952-5959; N. Mirtschin, T. Pretsch in RSC Advances 5, 2015, 46307-46315).

Während thermoplastische Polymere mit Formgedächtniseigenschaften und/oder mit thermoresponsiven Eigenschaften weitestgehend mittels üblicher thermoplastischer Verarbeitungsverfahren, wie Extrudieren, Spritzgießen, Heißpressen etc., zu Polymer-Formteilen in ihrer gewünschten permanenten Form verarbeitet werden können, gehen in jüngerer Zeit auch Bestrebungen dahin, sie mittels des Schmelzschichtverfahrens zu verarbeiten, wie es insbesondere in 3D-Druckern zur Anwendung gelangt. Das auch als "fused deposition modeling" (FDM) oder "fused filament fabrication" (FFF) bezeichnete Schmelzschichtverfahren stellt ein Fertigungsverfahren dar, bei welchem ein thermoplastisches Polymer oder ein Polymer-Blend aus thermoplastischen Polymeren plastifiziert und mittels einer üblicherweise im Druckkopf des 3D-Druckers vorgesehenen Düse schichtweise abgeschieden wird, um das letztlich aus einer Vielzahl an solchen Schichten gebildete Polymer-Formteil in seiner permanenten Form zu erzeugen. Dies ermöglicht einerseits eine auch zum Prototyping oder für Kleinserien geeignete, schichtweise Herstellung von relativ komplexen und beispielsweise durch herkömmliche thermoplastische Verarbeitungsverfahren, wie Spritzgießen, Extrudieren etc., nicht oder nur schwer herstellbaren Formteilen, wobei das Schmelzschichtverfahren andererseits zunehmend auch für die Serienfertigung von Polymer-Formteilen mit relativ komplexer Geometrie oder Oberflächenstrukturen eingesetzt wird. Bei dem Schmelzschichtverfahren mittels auch als "additive manufacturing" bezeichneten 3D-Druckens wird dabei üblicherweise ein dreidimensionales Modell des zu erzeugenden Formteils digital erstellt, was insbesondere mittels der bekannten Methoden des Computer Aided Designs (CAD) geschehen kann. Darüber hinaus wird mittels einer geeigneten Software, wie beispielsweise eines sogenannten Slicer-Programms (z.B. *Cura*™ oder dergleichen), das dreidimensionale Modell des zu erzeugenden Formteils in eine Mehrzahl an dünnen Schichten zerlegt, woraufhin das plastifizierte Polymer mittels der Düse des entsprechend bewegten Druckkopfes schichtweise abgeschieden wird, um das Formteil Schicht für Schicht aufzubauen. Unmittelbar nach dem Ausbringen des mehr oder minder strang- oder tropfenförmig aus der Düse des Druckkopfes ausgetragenen Polymerplastifikates beginnt der Aushärtungsprozess - oder genauer: der Erstarrungsprozess -, wobei das abgeschiedene Plastifikat beispielsweise bei Umgebungstemperatur oder auch unter aktiver Abkühlung erstarrt. Wird ein solchermaßen in seiner permanenten Form erzeugtes Polymer-Formteil aus thermoplastischen Polymeren mit Formgedächtnis- und/oder mit thermoresponsiven Eigenschaften auf deren Schalttemperatur erwärmt, nachdem es zuvor mittels der oben beschriebenen Programmierung (temporär) verformt worden ist, so verfügen derartige Polymer-Formteile über ein Form- und/oder Temperaturgedächtnis, wobei neben einer Thermoresponsivität beispielsweise auch thermochrome Eigenschaften zur Verfügung gestellt werden können, sofern das Polymer mit entsprechenden thermochromen Farbstoffen oder Pigmenten bedruckt oder versetzt worden ist. Darüber hinaus können derartige Polymer-Formteile z.B. auch mit magnetoresponsiven oder elektroaktiven Additiven, insbesondere in feinpartikulärer Form, versetzt werden, wodurch eine durch induktive Erwärmung ausgelöste Formänderung ausgelöst werden kann, nachdem das Polymer mit Formgedächtniseigenschaften und/oder mit thermoresponsiven Eigenschaften mit solchen Additiven versetzt und anschließend programmiert worden ist.

Die Erfindung sieht nun vor, dass ein zumindest in seinem Umfangsbereich aus solchen thermoplastischen Polymeren mit Formgedächtnis- und/oder mit thermoresponsiven Eigenschaften gebildetes Getrieberad entweder
- die permanente Form eines Zahn- oder Schneckenrades (z.B. in Form eines Stirn-, Ellipsen-, Kegel-, Kronen-, Schneckenrades oder dergleichen) aufweist, wobei das Polymer derart programmiert ist, dass es in der temporären Form zumindest einen im Wesentlichen in Form eines Zylinders, Kegels oder Kegelstumpfes ausgestalteten Umfangsabschnitt besitzt oder selbstverständlich auch praktisch vollumfänglich die temporäre Form im Wesentlichen eines Zylinders, Kegels oder Kegelstumpfes aufweisen kann (d.h. entsprechend dem Grundkörper des Zahn- oder Schneckenrades in der permanenten Form); und/oder
- in der permanenten Form zumindest einen im Wesentlichen in Form eines Zylinders, Kegels oder Kegelstumpfes ausgestalteten Umfangsabschnitt besitzt oder selbstverständlich auch praktisch vollumfänglich die permanente Form im Wesentlichen eines Zylinders, Kegels oder Kegelstumpfes aufweisen kann (d.h. entsprechend dem Grundkörper eines Zahn- oder Schneckenrades), wobei das Polymer derart programmiert ist, dass es die temporäre Form eines Zahnoder Schneckenrades (z.B. in Form eines Stirn-, Ellipsen-, Kegel-, Kronen-, Schneckenrades oder dergleichen) aufweist.
Auf diese Weise lässt sich ein erfindungsgemäßes Getrieberad einerseits aus seiner temporären Form, in welcher es einen einem Zahn- oder Schneckenrad entsprechenden Grundkörper ohne oder mit nur sehr geringer Außenverzahnung aufweist, in seine permanente Form in Form des Zahn- oder Schneckenrades zurück überführen, indem es insbesondere auf die Schalttemperatur des Polymers mit Formgedächtniseigenschaften und/oder mit thermoresponsiven Eigenschaften erwärmt wird, wobei es dann in seiner permanenten Form nach Art eine Zahn- oder Schneckenrades z.B. weitgehend formschlüssig und schlupffrei mit einem weiteren Zahn- oder Schneckenrad eines Getriebes im Eingriff zu stehen vermag, um bedarfsweise einen mittels des Getriebe angetriebenen Prozess spontan einzuschalten. Umgekehrt lässt sich auf diese Weise andererseits ein erfindungsgemäßes Getrieberad aus seiner temporären Form im Wesentlichen in Form eines Zahn- oder Schneckenrades mit Außenverzahnung in seine permanente Form in Form des entsprechenden Grundkörpers ohne oder mit nur sehr geringer Außenverzahnung zurück überführen, indem es insbesondere auf die Schalttemperatur des Polymers mit Formgedächtniseigenschaften und/oder mit thermoresponsiven Eigenschaften erwärmt wird, wobei es dann in seiner permanenten Form z.B. mit einem weiteren Zahn- oder Schneckenrad eines Getriebes außer Eingriff gebracht zu werden vermag, um bedarfsweise einen mittels des Getriebe angetriebenen Prozess spontan abschalten bzw. unterbrechen zu können.

Für das erfindungsgemäße Getrieberad kommen grundsätzlich beliebige bekannte thermoplastische Polymere mit Formgedächtnis- und/oder mit thermoresponsiven Eigenschaften in Betracht, wobei vorteilhafte Vertreter - wenngleich nicht ausschließlich - Polyurethane, vorzugsweise aus der Gruppe der thermoplastischen Polyetherurethane und der thermoplastischen Polyesterurethane, umfassen. Beispiele für als geeignet befundene thermoplastische Polyurethane mit Formgedächtnis- und/oder mit thermoresponsiven Eigenschaften umfassen beispielsweise thermoplastische Polyurethanelastomere, deren das Hartsegment bzw. die Netzpunkte bildende Phase aus einem Diisocyanat, wie z.B. Methylendiphenyldiisocyanat (MDI), Isophorondiisocyanat (IPDI), 1,6-Hexamethylendiisocyanat (HMDI), Toluol-2,4-diisocyanat (TDI) oder 1,5-Pentandiisocyanat (PDI), und einem Diol, wie z.B. Ethylenglykol, 1,3-Propandiol, 1,4-Butandiol, 1,5-Pentandiol, 3-Methyl-1,5-pentandiol, 1,6-Hexandiol, 1,7-Heptandiol, 1,8-Octandiol, 2-Methyl-1,8-octandiol, 1,9-Nonandiol oder 1,10-Decandiol, aufgebaut ist. Sowohl die genannten Diisocyanate als auch die Polyole können einzeln oder auch in beliebiger Mischung untereinander eingesetzt werden. Das Schalt- bzw. Weichsegment kann in solchen thermoplastischen Polyurethanelastomeren beispielsweise ein Oligoether, insbesondere Polyethylenoxid, Polypropylenoxid, Polytetramethylenetherglykol (PTMEG) oder eine Kombination aus 2,2-Bis(4-hydroxyphenyl)-propan und Propylenoxid, sein. Ebenso kann das Schalt- bzw. Weichsegment z.B. ein Oligoester, insbesondere Polyethylenadipat, Polypropylenadipat, Polybutylenadipat, Polypentylenadipat oder Polyhexalenadipat, sein, wobei sich auch weitere Oligoester als nützlich erwiesen haben. Die Oligoester können z.B. durch Umsetzung von Ethylenglykol, 1,3-Propandiol, 1,4-Butandiol, 1,5-Pentandiol, 3-Methyl-1,5-pentandiol, 1,6-Hexandiol, 1,7-Heptandiol, 1,8-Octandiol, 2-Methyl-1,8-octandiol, 1,9-Nonandiol oder 1,10-Decandiol mit aliphatischen Dicarbonsäuren, wie z.B. Bernsteinsäure, Glutarsäure, Adipinsäure, Korksäure, Azelainsäure und Sebacinsäure, oder mit aromatischen Dicarbonsäuren, wie z.B. Phthalsäure, Isophthalsäure und Terephthalsäure, hergestellt werden. Die Dicarbonsäuren können einzeln oder als Gemische, z.B. in Form einer Bernstein-, Glutar- und Adipinsäuremischung, verwendet werden. Zur Herstellung der Polyesterpolyole kann es gegebenenfalls von Vorteil sein, anstelle von Dicarbonsäuren die entsprechenden Dicarbonsäurederivate, wie z.B. Carbonsäurediester mit 1 bis 4 Kohlenstoffatomen im Alkoholrest, Carbonsäureanhydride oder Carbonsäurechloride, zu verwenden. Beispiele für mehrwertige Alkohole umfassen Glykole mit 2 bis 10, vorzugsweise mit 2 bis 6, Kohlenstoffatomen, Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Die mehrwertigen Alkohole können allein oder gegebenenfalls in Mischung untereinander verwendet werden. Die Polyesterpolyole weisen ferner vorteilhafterweise Molekulargewichte zwischen etwa 400 und etwa 10.000 g/mol, bevorzugt zwischen etwa 600 und etwa 5.000 g/mol auf.

Darüber hinaus kommen beispielsweise Polycarbonat-basierte Polyurethanelastomere, also thermoplastische Polyesterurethane auf Basis von Polyestern der Kohlensäure, als thermoplastische Polyurethane mit Formgedächtnis- und/oder mit thermoresponsiven Eigenschaften in Betracht. Hierbei ist das Diol in einem thermoplastischen Polyurethanelastomer vorzugsweise im Wesentlichen vollständig oder in Teilen durch ein Hydroxyl-Endgruppen aufweisendes Polycarbonat, also durch ein Polycarbonatdiol, substituiert, welches aus der Umsetzung von einem Diol, insbesondere aus der Gruppe Ethylenglykol, 1,3-Propandiol, 1,4-Butandiol, 1,5-Pentandiol, 3-Methyl-1,5-pentandiol, 1,6-Hexandiol, 1,7-Heptandiol, 1,8-Octandiol, 2-Methyl-1,8-octandiol, 1,9-Nonandiol und 1,10-Decandiol, mit Diarylcarbonaten, wie z.B. Diphenyl-, Ditolyl-, Dixylyl-, Dinaphthylcarbonat, Dialkylcarbonaten, wie z.B. Diethyl-, Dipropyl-, Dibutyl-, Diamyl-, Dicyclohexylcarbonat, Dioxolanonen, wie z.B. Ethylen- und Propylencarbonat, Hexandiol-1,6-bischlorkohlensäureester, Phosgen oder Harnstoff erhalten werden kann.

Darüber hinaus kann gegebenenfalls in als geeignet befundenen thermoplastischen Polyurethanelastomeren mit Formgedächtnis- und/oder mit thermoresponsiven Eigenschaften z.B. der Kettenverlängerer Diol in Teilen durch ein Diamin substituiert werden. Ausführungsbeispiele hierfür umfassen Isophorondiamin, Ethylendiamin, 1,2-Propylendiamin, 1,3-Propylendiamin, N-Methyl-1,3-propylendiamin, N,N'-Dimethylethylendiamin und aromatische Diamine, wie z.B. 2,4-Toluylendiamin und 2,6-Toluylendiamin, 3,5-Diethyl-2,4-toluylendiamin und/oder 2,6-Toluylendiamin sowie primäre ortho-di-, tri- und/oder tetraalkylsubstituierte 4,4'-Diaminodiphenylmethane. Die genannten Diamine können ebenfalls sowohl einzeln als auch in beliebiger Mischung untereinander eingesetzt werden. Diamine als alleinige Kettenverlängerer sind im Allgemeinen nicht geeignet, da die resultierenden Polyharnstoffe dann nicht thermoplastisch zu verarbeiten sind bzw. unzureichende Formgedächtniseigenschaften ausweisen.

In thermoplastischen Polyesterurethanen mit Formgedächtnis- und/oder mit thermoresponsiven Eigenschaften lassen sich ferner beispielsweise Schaltsegmentblöcke u.a. aus Poly(ε-caprolacton)diolen mit zahlenmittleren Molekulargewichten zwischen etwa 1.000 und etwa 10.000 aufbauen. Die Schalttemperatur für den Formgedächtniseffekt kann je nach Gewichtsanteil des Schaltsegmentes (Variation z.B. zwischen etwa 50 Mass.-% und etwa 90 Mass.-%) und Molekulargewicht der Poly(ε-caprolacton)-diole z.B. zwischen etwa 40°C und etwa 60°C, insbesondere zwischen etwa 44°C und etwa 55°C, variieren. Die Kristallisationstemperaturen liegen z.B. in der Größenordnung zwischen etwa 20°C und etwa 40°C, insbesondere zwischen etwa 25°C und etwa 30°C. Auch Blockcopolymere, welche aus trans-Polyisopren und Urethanen aufgebaut sind, zeigen den Formgedächtniseffekt, wobei die Rückstelltemperatur in diesem Fall in der Größenordnung von etwa 65°C liegen kann, während die Kristallisationstemperatur von der chemischen Zusammensetzung abhängt und z.B. zwischen etwa 0°C und etwa 30°C eingestellt werden kann. Ferner können beispielsweise durch den Einsatz von Ruß als Füllstoffadditiv die Formgedächtniseigenschaften (u.a. die Rückstellrate und die Rückstelltemperatur) von trans-Polyisopren verändert werden. Darüber hinaus kommen beispielsweise Polyadipat-basierte Polyesterurethane für das erfindungsgemäße Verfahren in Betracht, wobei die Schalttemperatur ihrer Schalt- bzw. Weichsegmente etwa bei 37°C und die Kristallisationstemperatur deutlich unterhalb von etwa 23°C, insbesondere unterhalb etwa 10°C, liegt. Hinzu kommt, dass ein solches Material über sehr gute Formgedächtniseigenschaften (Formrückstellbarkeit, Fixierbarkeit) verfügt.

Im Übrigen sei an dieser Stelle darauf hingewiesen, dass die in der vorliegenden Offenbarung mit "Zahn- oder Schneckenrad" bezeichneten Getrieberäder mit einer beliebigen Verzahnung und/oder mit einem beliebigen Gewinde bzw. Schnecke ausgestattet sein können, wie z.B. in Form von achsparallelen Verzahnungen, Schrägverzahnungen, Doppelschrägverzahnungen mit oder ohne Freistich, in Form von verschiedene Bogenverzahnungen oder z.B. in Form von Schraubengewinden, Schneckengewinden oder Hypoidgewinden. Ferner umfasst der Begriff "Zahnrad" im Rahmen der vorliegenden Offenbarung auch Rändelräder.

Das erfindungsgemäße Getrieberad kann vorzugsweise
- im Wesentlichen gänzlich aus dem wenigstens einen thermoplastischen Polymer mit Formgedächtniseigenschaften und/oder mit thermoresponsiven Eigenschaften gebildet; oder
- umfangsseitig aus dem wenigstens einem thermoplastischen Polymer mit Formgedächtniseigenschaften und/oder mit thermoresponsiven Eigenschaften gebildet oder hiermit, insbesondere in Form einer Monoschicht, beschichtet (der Kern des Getrieberades kann in diesem Fall z.B. aus Metallwerkstoffen oder herkömmlichen, vorzugsweise gleichfalls thermoplastischen, Polymeren gefertigt sein) sein, wobei es, wie weiter unten noch näher erläutert, mittels der bekannten thermoplastischen Verarbeitungsverfahren einschließlich des Schmelzschichtens in seiner permanenten Form erzeugt und sodann in seine temporäre Form programmiert werden kann.

Gemäß einer Weiterbildung eines erfindungsgemäßen Getrieberades kann ferner vorgesehen sein, dass es sich bei dem wenigstens einen thermoplastischen Polymer mit Formgedächtniseigenschaften und/oder mit thermoresponsiven Eigenschaften um ein solches mit Zweiweg-Formgedächtniseigenschaften handelt, dessen Schaltsegmente beim Übergang zwischen ihrem vornehmlich kristallinen Zustand und ihrem vornehmlich amorphem Zustand eine Formänderung erfahren, so dass das Getrieberad einerseits mittels Abkühlen des Polymers auf die Kristallisationstemperatur, andererseits mittels Erwärmen des Polymers in den Schalttemperaturbereich reversibel zwischen
- der Form eines Zahn- oder Schneckenrades und der temporären Form mit zumindest einem im Wesentlichen in Form eines Zylinders, Kegels oder Kegelstumpfes ausgestalteten Umfangsabschnitt; und/oder
- der Form mit zumindest einem im Wesentlichen in Form eines Zylinders, Kegels oder Kegelstumpfes ausgestalteten Umfangsabschnitt und der temporären Form eines Zahn- oder Schneckenrades
hin und her schaltbar ist, d.h. das entsprechend programmierte Polymer verformt sich bei entsprechender Temperaturführung selbsttätig zwischen den vorgenannten Zuständen hin und her. Derartige Polymere sind z.B. aus T. Pretsch, M. Bothe: "Bidirectional actuation of a thermoplastic polyurethane elastomer", Journal of Materials Chemistry A, 20 (2013), 14.491-14.497 bekannt, wobei exemplarisch ein thermoplastisches Polyurethanelastomer mit Hartsegmenten bzw. Netzpunkten auf der Basis von Methylendiphenylisocyanat (MDI) und 1,4-Butandiol (kristallin/amorph) und mit Schalt- bzw. Weichsegmenten auf der Basis von Polybutylen-1,4-adipat, welches durch Reaktion von 1,4-Butandiol mit Adipinsäure erhalten werden kann, erwähnt sei. Wird dieses Polymer auf eine Schalt- bzw. Verformungstemperatur von etwa 60°C erwärmt, so lässt es sich zwecks seiner Programmierung, vorzugsweise mit einer langsamen Verformungsrate von beispielsweise etwa 1%/s, z.B. mit einer Dehnung von insgesamt bis zu etwa 1000% verformen, woraufhin es auf etwa 0°C abgekühlt wird, um eine Verformung bzw. Ausdehnung des Materials zu erzielen. Wird das Polymer sodann bis in den Schalttemperaturbereich von etwa 30°C bis 55°C erwärmt, so werden die Schaltsegmente aufgeschmolzen und von ihrem vornehmlich kristallinen Zustand in ihren vornehmlich amorphen Zustand überführt, so dass das Polymer wieder schrumpft. Wird es anschließend wieder auf seine Kristallisationstemperatur im Bereich von unterhalb etwa 20°C abgekühlt, so kristallisieren die Schaltsegmente erneut und das Polymer dehnt sich abermals aus, etc.

Gemäß einer vorteilhaften Weiterbildung des erfindungsgemäßen Getrieberades kann vorgesehen sein, dass es zumindest teilweise aus elektrisch leitfähigen und/oder magnetoresponsiven Materialien gebildet ist, insbesondere aus der Gruppe der Metalle und Metallverbindungen einschließlich deren Legierungen und Oxide sowie Kohlenstoff.

In diesem Zusammenhang kann beispielsweise vorgesehen sein, dass das Getrieberad
- einen Kern aus elektrisch leitfähigen und/oder magnetoresponsiven Materialien aufweist; und/oder insbesondere
- das wenigstens eine thermoplastische Polymer mit Formgedächtniseigenschaften und/oder mit thermoresponsiven Eigenschaften, insbesondere im Wesentlichen partikelförmige, Füll- und/oder Verstärkungsstoffe aus elektrisch leitfähigen und/oder magnetoresponsiven Materialien enthält.

Der Einsatz von elektrisch leitfähigen und/oder magnetoresponsiven Materialien, sei es als Kern des Getrieberades oder sei es insbesondere in Form von Füllstoffen, kann beispielsweise neben einer als solchen bekannten Einsparung an Polymer insbesondere dazu genutzt werden, dem Getrieberad bestimmte gewünschte Eigenschaften zu verleihen, wie beispielsweise elektroaktive Eigenschaften und/oder die Möglichkeit einer Widerstandsheizung, wobei beispielsweise Füllstoffe auf der Basis von Kohlenstoff, Metallen und Metallverbindungen einschließlich deren Legierungen und Oxiden oder dergleichen eingesetzt werden können. So können derartige Materialien, vorzugsweise in Form von Füllstoffen, beispielsweise eine Graphenstruktur aufweisen, wie sie z.B. im Graphit, in Kohlenstoffnanoröhrchen (carbon nano tubes, CNT), Graphen-Flocken oder expandiertem Graphit vorliegt. Ebenso können andere Füllstoffe, z.B. mit einer nanoskaligen Dimension, als Füllstoffe verwendet werden. Beispielsweise kommen hierfür magnetische Nanoteilchen, ferromagnetische Partikel, insbesondere NiZn-Partikel, Eisenoxidpartikel und Magnetitpartikel in Betracht. Ebenfalls können sogenannte Nanoclays als Füllstoffe verwendet werden. Die Nanoclays können beispielsweise auf Basis von Siliziumnitrid, Siliziumcarbid, Siliziumoxid, Zirkonoxid und/oder Aluminiumoxid gebildet sein. Weitere mögliche Füllstoffe umfassen oligomere Silsesquioxane, Graphit-Partikel, Graphene, Kohlenstoffnanoröhrchen (CNT), aber auch Metall-Feinpartikel. Selbstverständlich können auch Kombinationen solcher Füllmaterialien verwendet werden. Die Füllstoffe sind geeignet, um die mechanischen, elektrischen, magnetischen und/oder optischen Eigenschaften des Polymers mit Formgedächtnis- und/oder mit thermoresponsiven Eigenschaften einzustellen und an den jeweiligen Anwendungszweck anzupassen. Dies eröffnet einem erfindungsgemäßen Getrieberad beispielsweise die Möglichkeit, dass es induktiv oder auch konvektiv auf die Schalttemperatur des thermoplastischen Polymers mit Formgedächtnis- und/oder mit thermoresponsiven Eigenschaften erwärmt werden kann, um den zuvor programmierten Formänderungsvorgang gezielt auszulösen.

Darüber hinaus gibt die Erfindung die Möglichkeit, dass dem thermoplastischen Polymer mit Formgedächtnis- und/oder mit thermoresponsiven Eigenschaften des Getrieberades eines oder weitere, als solche weitgehend aus dem Stand der Technik bekannte Additive zugesetzt sind, wobei solche Additive insbesondere Farbstoffe, Pigmente und/oder Füll- und Verstärkungsstoffe umfassen können, aber selbstverständlich auch beliebige andere Additive, wie Gleitmittel, Weichmacher, Antioxidantien, UV-Stabilisatoren, Mattierungsmittel, Verstärkungsstoffe, Flammschutzmitte, Antistatika, Hydrolysestabilisatoren, Schlagzähmodifikatoren etc., zugesetzt sein können. Darüber hinaus ist es beispielsweise auch möglich, dem Polymer mit Formgedächtnis- und/oder mit thermoresponsiven Eigenschaften des Getrieberades eine Ölkomponente, z.B. Silikonöl, und/oder andere Additive zuzusetzen.

Wie bereits angedeutet, kann bei einem Getriebe, welches wenigstens ein erfindungsgemäßes Getrieberad aufweist, mit Vorteil vorgesehen sein, dass es wenigstens ein weiteres Zahn- und/oder Schneckenrad aufweist, welches
- mit der permanenten Form des Getrieberades in Form eines Zahn- oder Schneckenrades im Eingriff steht, während es mit der temporären Form des Getrieberades mit zumindest einem im Wesentlichen in Form eines Zylinders, Kegels oder Kegelstumpfes ausgestalteten Umfangsabschnitt außer Eingriff steht; und/oder
- mit der permanenten Form des Getrieberades mit zumindest einem im Wesentlichen in Form eines Zylinders, Kegels oder Kegelstumpfes ausgestalteten Umfangsabschnitt außer Eingriff steht, während es mit der temporären Form des Getrieberades in Form eines Zahnoder Schneckenrades im Eingriff steht,
so dass durch Schalten des thermoplastischen Polymers mit Formgedächtnis- und/oder mit thermoresponsiven Eigenschaften, um das erfindungsgemäße Getrieberad aus seiner temporären Form wieder in seine permanente Form zurück zu überführen, erreicht wird, dass das Getriebe entweder in Betrieb gesetzt (das Getrieberad gerät in seiner permanenten Form eines Zahn- oder Schneckenrades mit dem weiteren Zahnoder Schneckenrad des Getriebes in Eingriff, mit dem es mangels Verzahnung zuvor nicht im Eingriff stand) oder stillgesetzt wird (das Getrieberad gerät in seiner permanenten Form ohne Verzahnung mit dem weiteren Zahn- oder Schneckenrad des Getriebes außer Eingriff, mit dem über die Verzahnung zuvor im Eingriff stand).

Darüber hinaus kann ein mit einem erfindungsgemäßen Getrieberad versehenes Getriebe vorzugsweise vorgesehen sein, dass dem Getrieberad eine, insbesondere elektrische, induktive oder konvektive, Temperiereinrichtung zugeordnet ist, um das Polymer mit Formgedächtnis- und/oder thermoresponsiven Eigenschaften insbesondere auf seine Schalttemperatur zu erwärmen und den Formgedächtniseffekt gezielt auszulösen, so dass das Getrieberad aus seiner temporären Form in seine permanente Form zurückgestellt wird. Sofern das Getrieberad elektrisch leitfähige und/oder thermoresponsive Materialien, vorzugsweise in Form von Füllstoffen, enthält, muss die Temperiereinrichtung nicht notwendigerweise konvektiv sind, sondern kann beispielsweise auch eine elektrische Induktionsheizung vorgesehen sein, welche die Füllstoffe aufheizt und welche die Wärme wiederum in die Polymermatrix aus dem Polymer mit Formgedächtnis- und/oder mit thermoresponsiven Eigenschaften abgeben.

Gemäß einer vorteilhaften Weiterbildung eines wenigstens ein erfindungsgemäßes Getrieberad umfassenden Getriebes kann ferner vorgesehen sein, dass dem Getrieberad eine Verformungseinrichtung zugeordnet ist, so dass das Getrieberad in dem Getriebe selbst programmiert werden kann und zu diesem Zweck nicht demontiert werden muss. Sofern hierbei eine Warmverformung des Polymers mit Formgedächtnis- und/oder mit thermoresponsiven Eigenschaften vorgesehen ist, anlässlich welcher das Polymer zumindest bis auf seine Schalttemperatur erwärmt werden muss, wonach es zumindest auf seine Formfixierungstemperatur abgekühlt wird, umfasst das Getriebe zweckmäßigerweise auch eine Temperiereinrichtung, wie eine solche der vorgenannten Art.

Die Verformungseinrichtung des Getriebes kann vorzugsweise wenigstens eine
- zu der im Wesentlichen unverzahnten Umfangsfläche des Getrieberades in seiner temporären Form mit zumindest einem im Wesentlichen in Form eines Zylinders, Kegels oder Kegelstumpfes ausgestalteten Umfangsabschnitt komplementäre Formwalze; und/oder
- zu der verzahnten Umfangsfläche des Getrieberades in seiner temporären Form eines Zahn- oder Schneckenrades komplementäre Formwalze
aufweisen, welche gegen das Getrieberad anpressbar ist, wobei die Formwalze aus den vorgenannten Gründen insbesondere temperierbar sein kann. Zur Programmierung des Polymers mit Formgedächtnis- und/oder mit thermoresponsiven Eigenschaften des erfindungsgemäßen Getrieberades kann die zu dessen temporären Form komplementäre Formwalze auf diese Weise gegen das in der permanenten Form befindliche Getrieberad angepresst werden, wonach letzteres und die Formwalze z.B. in entgegengesetzter Richtung mit aufeinander abgestimmten Drehgeschwindigkeiten rotiert werden, um das Getrieberad in seiner temporären Form zu programmieren. Vorteilhafterweise können hierzu beispielsweise auch Formwalzenpaare eingesetzt werden, welche z.B. von diametral entgegengesetzten Seiten gegen das Getrieberad angepresst werden, um dieses in seiner temporären Form zu programmieren.

Wie bereits angedeutet, kann bei dem erfindungsgemäßen Verfahren zur Herstellung des Getrieberades vorgesehen sein, dass die Bereitstellung des Getrieberades
- in der permanenten Form eines Zahn- oder Schneckenrades, oder
- in der permanenten Form mit zumindest einem im Wesentlichen in Form eines Zylinders, Kegels oder Kegelstumpfes ausgestalteten Umfangsabschnitt;
gemäß Schritt (a) dadurch erfolgt, indem das wenigstens eine thermoplastische Polymer mit Formgedächtniseigenschaften und/oder mit thermoresponsiven Eigenschaften plastifiziert und das Getrieberad in seiner permanenten Form mittels thermoplastischer Verarbeitungsverfahren, insbesondere aus der Gruppe Spritzgießen, Heißpressen, Extrudieren und Schmelzschichten, erzeugt wird.

Wie ebenfalls bereits angedeutet, kann bei dem erfindungsgemäßen Verfahren ferner vorgesehen sein, dass das Getrieberad gemäß Schritt (b) dadurch programmiert wird, indem es aus der permanenten Form
- bei einer Temperatur unterhalb der Schalttemperatur des wenigstens einen thermoplastischen Polymers mit Formgedächtniseigenschaften und/oder mit thermoresponsiven Eigenschaften in die temporäre Form, z.B. bei Umgebungstemperatur, kaltverformt wird; oder
- auf eine Temperatur, welche zumindest der Schalttemperatur des wenigstens einen thermoplastischen Polymers mit Formgedächtniseigenschaften und/oder mit thermoresponsiven Eigenschaften entspricht, warmverformt wird, wonach es zumindest auf die Formfixierungstemperatur des thermoplastischen Polymes mit Formgedächtniseigenschaften und/oder mit thermoresponsiven Eigenschaften abgekühlt wird.

In Bezug auf die Programmierung des Getrieberades aus seiner permanenten Form in seine temporäre Form gemäß Schritt (b) des erfindungsgemäßen Verfahrens kann ferner vorgesehen sein, dass das Getrieberad mittels wenigstens einer, zu der temporären Form des Getrieberades im Wesentlichen komplementären Formwalze, z.B. auch mittels zwei oder mehrerer solcher Formwalzen (siehe oben), verformt wird, welche gegen das Getrieberad in der permanenten Form angepresst wird bzw. werden. Die wenigstens eine Formwalze kann hierbei insbesondere temperiert werden, um das Polymer mit Formgedächtnis- und/oder mit thermoresponsiven Eigenschaften bis in den Bereich seiner Schalttemperatur zu erwärmen und/oder bis in den Bereich seiner Formfixierungstemperatur abzukühlen. Stattdessen kann in Bezug auf die Programmierung des Getrieberades gemäß Schritt (b) des erfindungsgemäßen Verfahrens beispielsweise vorgesehen sein, dass das Getrieberad in ein zu der temporären Form des Getrieberades im Wesentlichen komplementäres Formwerkzeugs eingebracht und mit einem Innendruck beaufschlagt wird, um das Getrieberad in der permanenten Form gegen das Formwerkzeug anzupressen und in die temporäre Form zu überführen. Auch in diesem Fall kann das Formwerkzeug und/oder ein den Innendruck bewirkendes Druckfluid insbesondere temperiert werden, um das Polymer mit Formgedächtnis- und/oder mit thermoresponsiven Eigenschaften bis in den Bereich seiner Schalttemperatur zu erwärmen und/oder bis in den Bereich seiner Formfixierungstemperatur abzukühlen.

Während im erstgenannten Fall des Einsatzes von Formwalzen das Getrieberad folglich an seinem Außenumfang mit Druck beaufschlagt wird, um das Polymer mit Formgedächtnis- und/oder mit thermoresponsiven Eigenschaften mittels der hiergegen angepressten Formwalze(n) zu stauchen bzw. zu komprimieren, wird das Getrieberad im letztgenannten Fall des Einsatzes von Formwerkzeugen in Verbindung mit einer Innendruckbeaufschlagung folglich an seinem Innenumfang mit Druck, z.B. mit Fluiddruck, beaufschlagt, um das Polymer mit Formgedächtnis- und/oder mit thermoresponsiven Eigenschaften zu dehnen bzw. zu expandieren, bis es mit der zu seiner gewünschten Umfangskontur komplementären Innenkontur des Formwerkzeugs zur Anlage gelangt und dadurch verformt wird.

Weitere Merkmale und Vorteile der Erfindung ergeben sich aus der nachfolgenden Beschreibung von Ausführungsbeispielen unter Bezugnahme auf die Zeichnungen. Dabei zeigen:

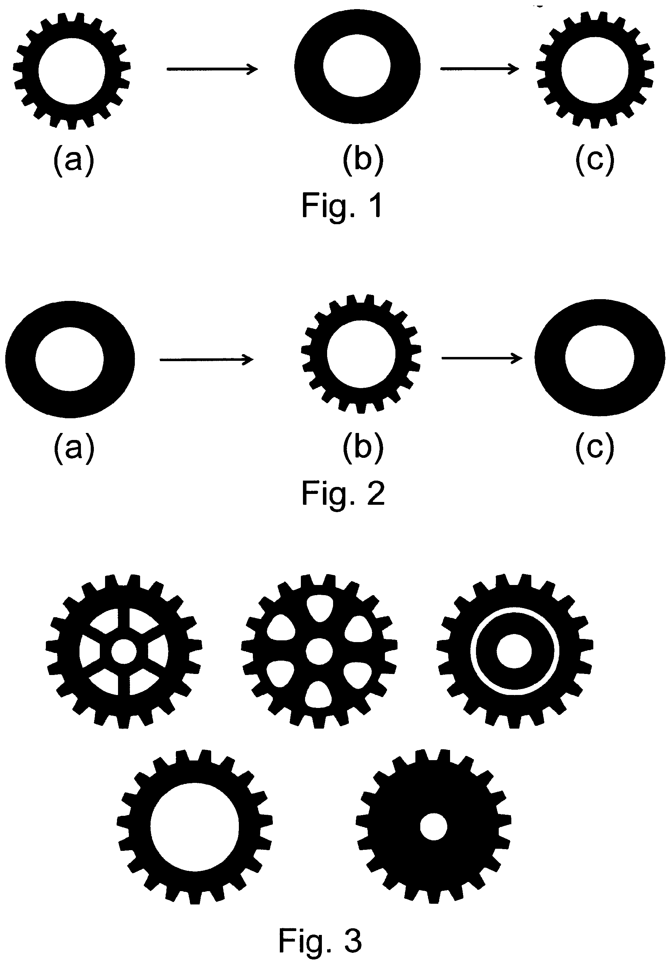

- Fig. 1: ein schematisches Fließbild der Programmierung eines Getrieberades aus seiner permanenten Form eines Zahnrades - hier in Form eines Stirnrades - (a) in eine temporäre Form in Form eines Zylinders - hier in Form eines Kreiszylinders - im Wesentlichen ohne Verzahnung (b) sowie anschließender Rückstellung in die permanente Form durch Auslösen des Formgedächtniseffektes infolge Erwärmung auf die Schalttemperatur des Polymers (c) ;
- Fig. 2: ein der Fig. 1 entsprechendes schematisches Fließbild der Programmierung eines Getrieberades aus seiner permanenten Form eines Zylinders - hier in Form eines Kreiszylinders - im Wesentlichen ohne Verzahnung - (a) in eine temporäre Form in Form eines Zahnrades - hier in Form eines Stirnrades - (b) sowie anschließender Rückstellung in die permanente Form durch Auslösen des Formgedächtniseffektes infolge Erwärmung auf die Schalttemperatur des Polymers (c); und
- Fig. 3: schematische Ansichten weiterer exemplarischer Getrieberäder in Form von Zahnrädern - hier wiederum nach Art von Stirnrädern - in der permanenten oder temporären Form.

**Ausführungsbeispiel 1:** Herstellung eines Getrieberades aus Formgedächtnispolymeren in der permanenten Form eines Zahnrades mittels Schmelzschichten sowie anschließender Programmierung zu einem Zylinder ohne Verzahnung (temporäre Form).

### Eingesetztes Formgedächtnispolymer:

Thermoplastisches Polyesterurethan mit Formgedächtnis- und thermoresponsiven Eigenschaften des Typs "*Desmopan*™ *DP2795A-SMP" (Bayer)* mit einer Schalttemperatur im Bereich von etwa 30°C bis 50°C und einer Formfixierungstemperatur von etwa - 15°C (im Folgenden als "Polymer" bezeichnet).

Zunächst wird die gewünschte permanente Form des zu erzeugenden Getrieberades in Form eines Zahnrades - hier: in Form eines Stirnrades - entsprechend der Fig. 1 (a) mittels eines AutoCAD-Programms in als solcher bekannter Weise generiert und hieraus eine .stl-Datei mit einem dreidimensionalen Modell des Getrieberades erzeugt. Dieses dreidimensionale Modell kann anschließend mittels eines Slicer-Programms - hier: "*Cura*™" - nachbearbeitet werden, um es in eine Mehrzahl an Einzelschichten zu zerlegen, welche mittels des Schmelzschichtverfahrens schichtweise erzeugt werden sollen.

Zur Herstellung des Getrieberades in seiner permanenten Form eines Zahnrades gemäß der Fig. 1 (a) mittels des Schmelzschichtverfahrens wird ein 3D-Drucker eingesetzt, welcher mit einem Filament aus dem vorgenannten Polymer des Typs "*Desmopan*™ *DP2795A-SMP*" bestückt wird. Anlässlich des Schmelzschichtens wird das Polymerfilament plastifiziert und mittels des bewegten Druckkopfes des 3D-Druckers schichtweise abgeschieden und erstarrt. Das derart erhaltene Getrieberad in Form eines nach Art eines Stirnrades ausgestalteten Zahnrades mit umfangsseitiger Verzahnung ist der Fig. 1 (a) zu entnehmen.

Wie aus der Fig. 1 (b) ersichtlich, welche das Getrieberad gemäß der Fig. 1 (a) in seinem verformten Zustand - d.h. in seiner temporären Form im Wesentlichen in Form eines Zylinders ohne Verzahnung nach Programmierung des Polymers - zeigt, wird das in der vorgenannten Weise in seiner permanenten Form erzeugte Getrieberad nun programmiert, indem seine umfangsseitige Verzahnung bei einer Temperatur von im vorliegenden Fall etwa 60°C, welche die im vorliegenden Fall etwa 55°C betragende Schalttemperatur des eingesetzten Polymers geringfügig übersteigt, zumindest abschnittsweise verformt wird, so dass die Verzahnung praktisch nicht mehr vom Außenumfang des Getrieberades hervorsteht, sondern sich eine im Wesentlichen glatte Zylinderoberfläche ergibt, wonach der derart verformte (Kreis-)Zylinder zumindest auf die im vorliegenden Fall etwa - 15°C betragende Formfixierungstemperatur des Polymers abgekühlt wird, um die Verformung zu fixieren, so dass diese temporäre Verformung erhalten bleibt, solange das verformte Getrieberad nicht nochmals bis in den Bereich der Schalttemperatur des eingesetzten Polymers erwärmt wird.

Die Verformung kann beispielsweise mittels Formwalzen mit im Wesentlichen glatter Oberfläche durchgeführt werden, welche an den Außenumfang des Getrieberades angepresst werden, so dass das Polymer anlässlich der Programmierung zumindest abschnittsweise gestaucht bzw. komprimiert wird. Stattdessen kann die Verformung jedoch auch auf beliebige andere bekannte Weise durchgeführt werden, wie beispielsweise mittels entsprechender Formwerkzeuge, gegen welche das Getrieberad infolge Beaufschlagung mit Innendruck angepresst wird, so dass das Polymer anlässlich der Programmierung zumindest abschnittsweise gedehnt bzw. expandiert wird.

Das temporär verformte Getrieberad im Wesentlichen in Form eines Kreiszylinders gemäß der Fig. 1 (b) kann sodann z.B. in einem Getriebe (nicht zeichnerisch wiedergegeben) verbaut werden, in welchem es zum Einschalten eines beliebigen Prozesses dient, indem es mit einem weiteren Zahnrad dieses Getriebes im Eingriff steht, sobald es wieder in seine permanente Form eines Zahnrades zurückgestellt wird. Letzteres ist der Fig. 1 (c) zu entnehmen, bei welcher der temporär verformte, weitestgehend unverzahnte Außenumfang des Getrieberades gemäß Fig. 1 (b) erneut zumindest auf die Schalttemperatur des eingesetzten Polymers erwärmt worden ist, so dass sich der Außenumfang des Getrieberades wieder in seinen ursprünglichen Zustand mit Verzahnung entsprechend der Fig. 1 (a) zurück verformt hat, in welchem das Getrieberad dann beispielsweise mit einem weiteren, in einem Getriebe verbauten Zahnrad im Eingriff zu stehen vermag.

**Ausführungsbeispiel 2:** Herstellung eines Getrieberades aus Formgedächtnispolymeren in der permanenten Form eines Zylinders ohne Verzahnung mittels Schmelzschichten sowie anschließender Programmierung zu einem Zahnrad (temporäre Form).

### Eingesetztes Formgedächtnispolymer:

Thermoplastisches Polyesterurethan mit Formgedächtnis- und thermoresponsiven Eigenschaften des Typs "*Desmopan*™ *DP2795A-SMP" (Bayer)* mit einer Schalttemperatur im Bereich von etwa 30°C bis 50°C und einer Formfixierungstemperatur von etwa - 15°C (im Folgenden als "Polymer" bezeichnet).

Entsprechend dem obigen Ausführungsbeispiel 1 wird zunächst wiederum die gewünschte permanente Form des zu erzeugenden Getrieberades in Form eines Zylinders - hier: in Form eines Kreiszylinders mit im Wesentlichen glatter Oberfläche - entsprechend der Fig. 2 (a) mittels eines AutoCAD-Programms generiert und hieraus eine .stl-Datei mit einem dreidimensionalen Modell des Getrieberades erzeugt. Dieses dreidimensionale Modell wird anschließend mittels eines Slicer-Programms - hier: "*Cura*™" - nachbearbeitet, um es in eine Mehrzahl an Einzelschichten zu zerlegen, welche mittels des Schmelzschichtverfahrens schichtweise erzeugt werden sollen.

Zur Herstellung des Getrieberades in seiner permanenten Form eines Zylinders gemäß der Fig. 2 (a) mittels des Schmelzschichtverfahrens wird derselbe 3D-Drucker wie im obigen Ausführungsbeispiel 1 eingesetzt, welcher wiederum mit einem Filament aus dem vorgenannten Polymer des Typs "*Desmopan*™ *DP2795A-SMP*" bestückt wird. Anlässlich des Schmelzschichtens wird das Polymerfilament plastifiziert und mittels des bewegten Druckkopfes des 3D-Druckers schichtweise abgeschieden und erstarrt. Das derart erhaltene Getrieberad im Wesentlichen in Form eines Kreiszylinders ohne Verzahnung ist der Fig. 2 (a) zu entnehmen.

Wie aus der Fig. 2 (b) ersichtlich, welche das Getrieberad gemäß der Fig. 2 (a) in seinem verformten Zustand - d.h. in seiner temporären Form im Wesentlichen in Form eines nach Art eines Stirnrades ausgestalteten Zahnrades nach Programmierung des Polymers - zeigt, wird das in der vorgenannten Weise in seiner permanenten Form erzeugte Getrieberad nun programmiert, indem seine Umfangs- bzw. Mantelfläche bei einer Temperatur von im vorliegenden Fall etwa 60°C, welche die im vorliegenden Fall etwa 55°C betragende Schalttemperatur des eingesetzten Polymers geringfügig übersteigt, teilweise verformt wird, so dass die vormals weitgehend glatte Mantelfläche des Zylinders mit einer vom Außenumfang des Getrieberades vorstehenden Verzahnung versehen wird, wonach das derart verformte Zahnrad zumindest auf die im vorliegenden Fall etwa - 15°C betragende Formfixierungstemperatur des Polymers abgekühlt wird, um die Verformung zu fixieren, so dass diese temporäre Verformung erhalten bleibt, solange das verformte Getrieberad nicht nochmals bis in den Bereich der Schalttemperatur des eingesetzten Polymers erwärmt wird.

Die Verformung kann beispielsweise mittels Formwalzen mit einer zu der gewünschten Verzahnung des Getrieberades komplementären Außenverzahnung durchgeführt werden, welche an den Außenumfang des Getrieberades angepresst werden, so dass das Polymer anlässlich der Programmierung zumindest abschnittsweise gestaucht bzw. komprimiert wird. Stattdessen kann die Verformung jedoch auch auf beliebige andere bekannte Weise durchgeführt werden, wie beispielsweise mittels entsprechender Formwerkzeuge, gegen welche das Getrieberad infolge Beaufschlagung mit Innendruck angepresst wird, so dass das Polymer anlässlich der Programmierung zumindest abschnittsweise gedehnt bzw. expandiert wird.

Das temporär verformte Getrieberad in Form eines Zahnrades gemäß der Fig. 2 (b) kann sodann z.B. in einem Getriebe (nicht zeichnerisch wiedergegeben) verbaut werden, in welchem es zum Abschalten eines beliebigen Prozesses dient, indem es mit einem weiteren Zahnrad dieses Getriebes im Eingriff steht, aber hiervon außer Eingriff gebracht wird, sobald es wieder in seine permanente Form eines Zylinders ohne Verzahnung zurückgestellt wird. Letzteres ist der Fig. 2 (c) zu entnehmen, bei welcher der temporär verformte, verzahnte Außenumfang des Getrieberades gemäß Fig. 2 (b) erneut zumindest auf die Schalttemperatur des eingesetzten Polymers erwärmt worden ist, so dass sich der Außenumfang des Getrieberades wieder in seinen ursprünglichen Zustand ohne Verzahnung entsprechend der Fig. 2 (a) zurück verformt hat, in welchem das Getrieberad dann beispielsweise mit einem weiteren, in einem Getriebe verbauten Zahnrad außer Eingriff zu stehen vermag.

In der Fig. 3 sind schließlich exemplarisch weitere Ausführungsbeispiele für Getrieberäder in Form von Zahnrädern aus thermoplastischen Polymeren mit Formgedächtnis- und/oder mit thermoresponsiven Eigenschaften erkennbar, wobei es sich hierbei um deren permanente oder temporäre Form handeln kann. Selbstverständlich muss ihre Herstellung nicht notwendigerweise mittels des oben unter Bezugnahme auf die beiden Ausführungsbeispiele beschriebenen Schmelzschichtverfahrens erfolgen, sondern bieten sich insoweit beliebige bekannte thermoplastische Verarbeitungsverfahren an. Ferner kann je nach für das Getrieberad eingesetzten thermoplastischen Polymeren mit Formgedächtnis- und/oder mit thermoresponsiven Eigenschaften auch eine Kaltprogrammierung möglich sein, bei welcher das Getrieberad zwecks seiner Programmierung nicht, wie oben unter Bezugnahme auf die beiden Ausführungsbeispiele erläutert, auf die Schalttemperatur des Polymers erwärmt und sodann auf dessen Formfixierungstemperatur abgekühlt, sondern im Wesentlichen bei Umgebungstemperatur verformt wird, um es aus seiner permanenten Form in die temporäre Form zu überführen.

## Patentansprüche

1. Getrieberad, welches zumindest in seinem Umfangsbereich aus wenigstens einem plastifizierbaren Polymer gebildet ist, wobei es sich bei dem wenigstens einen plastifizierbaren Polymer um wenigstens ein thermoplastisches Polymer mit Formgedächtniseigenschaften handelt, welches Schaltsegmente und diese miteinander verbindende Netzpunkte aufweist, wobei das Polymer mit Formgedächtniseigenschaften mittels Verformung aus einer permanenten Form in eine temporäre Form programmierbar und mittels Erwärmung zumindest auf die Schalttemperatur aus der temporären Form in die permanente Form zurück verformbar ist, und **dadurch gekennzeichnet, dass** das Polymer derart programmiert ist, dass das Getrieberad
- die permanente Form eines Zahn- oder Schneckenrades aufweist und in der temporären Form zumindest einen in Form eines Zylinders, Kegels oder Kegelstumpfes ausgestalteten Umfangsabschnitt besitzt; oder
- in der permanenten Form zumindest einen in Form eines Zylinders, Kegels oder Kegelstumpfes ausgestalteten Umfangsabschnitt besitzt und die temporäre Form eines Zahn- oder Schneckenrades aufweist.

2. Getrieberad nach Anspruch 1, **dadurch gekennzeichnet, dass** das wenigstens eine thermoplastische Polymer mit Formgedächtniseigenschaften des Getrieberades thermoresponsive Eigenschaften aufweist.

3. Getrieberad nach Anspruch 1 oder 2, **dadurch gekennzeichnet, dass** es
- im Wesentlichen gänzlich aus dem wenigstens einen thermoplastischen Polymer mit Formgedächtniseigenschaften gebildet ist; oder
- umfangsseitig aus dem wenigstens einem thermoplastischen Polymer mit Formgedächtniseigenschaften gebildet oder hiermit, insbesondere in Form einer Monoschicht, beschichtet ist.

4. Getrieberad nach einem der Ansprüche 1 bis 3, **dadurch gekennzeichnet, dass** es sich bei dem wenigstens einen thermoplastischen Polymer mit Formgedächtniseigenschaften um ein solches mit Zweiweg-Formgedächtniseigenschaften handelt, dessen Schaltsegmente beim Übergang zwischen ihrem vornehmlich kristallinen Zustand und ihrem vornehmlich amorphem Zustand eine Formänderung erfahren, so dass das Getrieberad einerseits mittels Abkühlen des Polymers auf die Kristallisationstemperatur, andererseits mittels Erwärmen des Polymers in den Schalttemperaturbereich, reversibel zwischen
- der Form eines Zahn- oder Schneckenrades und der temporären Form mit zumindest einem in Form eines Zylinders, Kegels oder Kegelstumpfes ausgestalteten Umfangsabschnitt; oder
- der Form mit zumindest einem in Form eines Zylinders, Kegels oder Kegelstumpfes ausgestalteten Umfangsabschnitt und der temporären Form eines Zahn- oder Schneckenrades hin und her schaltbar ist.

5. Getrieberad nach einem der Ansprüche 1 bis 4, **dadurch gekennzeichnet, dass** es zumindest teilweise aus elektrisch leitfähigen und/oder magnetoresponsiven Materialien gebildet ist, insbesondere aus der Gruppe der Metalle und Metallverbindungen einschließlich deren Legierungen und Oxide sowie Kohlenstoff.

6. Getrieberad nach Anspruch 5, **dadurch gekennzeichnet, dass** es
- einen Kern aus elektrisch leitfähigen und/oder magnetoresponsiven Materialien aufweist; und/oder
- das wenigstens eine thermoplastische Polymer mit Formgedächtniseigenschaften Füll- und/oder Verstärkungsstoffe aus elektrisch leitfähigen und/oder magnetoresponsiven Materialien enthält.

7. Getriebe mit wenigstens einem Getrieberad nach einem der Ansprüche 1 bis 6.

8. Getriebe nach Anspruch 7, **dadurch gekennzeichnet, dass** es wenigstens ein weiteres Zahn- und/oder Schneckenrad aufweist, welches
- mit der permanenten Form des Getrieberades in Form eines Zahn- oder Schneckenrades im Eingriff steht, während es mit der temporären Form des Getrieberades mit zumindest einem in Form eines Zylinders, Kegels oder Kegelstumpfes ausgestalteten Umfangsabschnitt außer Eingriff steht; oder
- mit der permanenten Form des Getrieberades mit zumindest einem in Form eines Zylinders, Kegels oder Kegelstumpfes ausgestalteten Umfangsabschnitt außer Eingriff steht, während es mit der temporären Form des Getrieberades in Form eines Zahnoder Schneckenrades im Eingriff steht.

9. Getriebe nach Anspruch 7 oder 8, **dadurch gekennzeichnet, dass** dem Getrieberad eine, insbesondere elektrische, induktive oder konvektive, Temperiereinrichtung zugeordnet ist.

10. Getriebe nach einem der Ansprüche 7 bis 9, **dadurch gekennzeichnet, dass** dem Getrieberad eine Verformungseinrichtung zugeordnet ist.

11. Getriebe nach Anspruch 10, **dadurch gekennzeichnet, dass** die Verformungseinrichtung wenigstens eine
- zu der unverzahnten Umfangsfläche des Getrieberades in seiner temporären Form mit zumindest einem in Form eines Zylinders, Kegels oder Kegelstumpfes ausgestalteten Umfangsabschnitt komplementäre Formwalze; und/oder
- zu der verzahnten Umfangsfläche des Getrieberades in seiner temporären Form eines Zahn- oder Schneckenrades komplementäre Formwalze
aufweist, welche gegen das Getrieberad anpressbar ist. wobei die Formwalze insbesondere temperierbar ist.

12. Verfahren zur Herstellung eines Getrieberades nach einem der Ansprüche 1 bis 6, umfassend die folgenden Schritte:
(a) Bereitstellen des Getrieberades
- in der permanenten Form eines Zahn- oder Schneckenrades, oder
- in der permanenten Form mit zumindest einem in Form eines Zylinders, Kegels oder Kegelstumpfes ausgestalteten Umfangsabschnitt; und
(b) Programmieren des wenigstens einen thermoplastischen Polymers mit Formgedächtniseigenschaften, indem das Getrieberad
- aus der permanenten Form eines Zahn- oder Schneckenrades in die temporäre Form mit zumindest einem in Form eines Zylinders, Kegels oder Kegelstumpfes ausgestalteten Umfangsabschnitt verformt wird, oder
- aus der permanenten Form mit zumindest einem in Form eines Zylinders, Kegels oder Kegelstumpfes ausgestalteten Umfangsabschnitt in die temporäre Form eines Zahn- oder Schneckenrades verformt wird.

13. Verfahren nach Anspruch 12, **dadurch gekennzeichnet, dass** das Getrieberad gemäß Schritt (a) dadurch bereitgestellt wird, indem das wenigstens eine thermoplastische Polymer mit Formgedächtniseigenschaften plastifiziert und das Getrieberad in seiner permanenten Form mittels thermoplastischer Verarbeitungsverfahren, insbesondere aus der Gruppe Spritzgießen, Heißpressen, Extrudieren und Schmelzschichten, erzeugt wird.

14. Verfahren nach Anspruch 12 oder 13, **dadurch gekennzeichnet, dass** das Getrieberad gemäß Schritt (b) dadurch programmiert wird, indem es aus der permanenten Form
- bei einer Temperatur unterhalb der Schalttemperatur des wenigstens einen thermoplastischen Polymers mit Formgedächtniseigenschaften in die temporäre Form kaltverformt wird; oder
- auf eine Temperatur, welche zumindest der Schalttemperatur des wenigstens einen thermoplastischen Polymers mit Formgedächtniseigenschaften entspricht, warmverformt wird, wonach es zumindest auf die Formfixierungstemperatur des thermoplastischen Polymer mit Formgedächtniseigenschaften abgekühlt wird.

15. Verfahren nach einem der Ansprüche 12 bis 14, **dadurch gekennzeichnet, dass** das Getrieberad gemäß Schritt (b)
- mittels wenigstens einer, zu der temporären Form des Getrieberades komplementären Formwalze verformt wird, welche gegen das Getrieberad in der permanenten Form angepresst wird, wobei die Formwalze insbesondere temperiert wird; oder
- in ein zu der temporären Form des Getrieberades komplementäres Formwerkzeug eingebracht und mit einem Innendruck beaufschlagt wird, um das Getrieberad in der permanenten Form gegen das Formwerkzeug anzupressen und in die temporäre Form zu überführen, wobei das Formwerkzeug und/oder ein den Innendruck bewirkendes Druckfluid insbesondere temperiert wird.

## Claims

1. Gear wheel which, at least in its peripheral region, is composed of at least one plastifiable polymer, wherein the at least one plastifiable polymer is at least one thermoplastic polymer with shape-memory properties which has switching segments and has cross-links connecting these to one another, wherein the polymer with shape-memory properties can be deformed in a programmable manner by means of deformation from a permanent shape into a temporary shape and can be deformed back from the temporary shape into the permanent shape by means of heating at least to the switching temperature, **characterized in that** the polymer is programmed in such a manner that the gear wheel
- has the permanent shape of a toothed or worm wheel, and in the temporary shape has at least one peripheral section configured in the shape of a cylinder, cone or truncated cone; or
- in the permanent shape has at least one peripheral section configured in the shape of a cylinder, cone or truncated cone and has the temporary shape of a toothed or worm wheel.

2. Gear wheel according to Claim 1, **characterized in that** the at least one thermoplastic polymer with shape-memory properties of the gear wheel has thermoresponsive properties.

3. Gear wheel according to Claim 1 or 2, **characterized in that**
- it is composed substantially entirely of the at least one thermoplastic polymer with shape-memory properties; or
- in the vicinity of its periphery it is composed of the at least one thermoplastic polymer with shape-memory properties or has a coating thereof, in particular in the form of a monolayer.

4. Gear wheel according to any of Claims 1 to 3, **characterized in that** the at least one thermoplastic polymer with shape-memory properties is a polymer with two-way shape-memory properties whose switching segments undergo a shape change on transition between their mainly crystalline state and their mainly amorphous state in such a manner that the gear wheel is reversibly switchable, on the one hand by means of cooling of the polymer to the crystallization temperature and on the other hand by means of heating of the polymer to the switching temperature region, between
- the shape of a toothed or worm wheel and the temporary shape with at least one peripheral section in the shape of a cylinder, cone or truncated cone; or
- the shape with at least one peripheral section in the shape of a cylinder, cone or truncated cone and the temporary shape of a toothed or worm wheel.

5. Gear wheel according to any of Claims 1 to 4, **characterized in that** it is composed at least to some extent of electrically conductive and/or magnetoresponsive materials, in particular from the group of the metals and metal compounds inclusive of their alloys and oxides, and carbon.

6. Gear wheel according to Claim 5, **characterized in that**
- it has a core made of electrically conductive and/or magnetoresponsive materials; and/or
- the at least one thermoplastic polymer with shape-memory properties comprises fillers and/or reinforcing materials respectively made of electrically conductive and/or magnetoresponsive materials.

7. Power-transmission system with at least one gear wheel according to any of Claims 1 to 6.

8. Power-transmission system according to Claim 7, **characterized in that** it has at least one further toothed and/or worm wheel which
- engages with the permanent form of the gear wheel configured in the shape of a toothed or worm wheel, while not engaging with the temporary form of the gear wheel with at least one peripheral section configured in the shape of a cylinder, cone or truncated cone; or
- does not engage with the permanent form of the gear wheel with at least one peripheral section configured in the shape of a cylinder, cone or truncated cone, while engaging with the temporary form of the gear wheel in the shape of a toothed or worm wheel.

9. Power-transmission system according to Claim 7 or 8, **characterized in that** there is an in particular electrical, inductive or convective temperature-control device allocated to the gear wheel.

10. Power-transmission system according to any of Claims 7 to 9, **characterized in that** there is a deformation device allocated to the gear wheel.

11. Power-transmission system according to Claim 10, **characterized in that** the deformation device has at least one
- shaping roll complementary to the untoothed peripheral area of the gear wheel in its temporary shape with at least one peripheral section configured in the shape of a cylinder, cone or truncated cone;
and/or
- shaping roll complementary to the toothed peripheral area of the gear wheel in its temporary shape of a toothed or worm wheel, which shaping roll can be pressed against the gear wheel, where the shaping roll is in particular temperature-controllable.

12. Process for the production of a gear wheel according to any of Claims 1 to 6, comprising the following steps:
(a) provision of the gear wheel
- in the permanent shape of a toothed or worm wheel, or
- in the permanent shape with at least one peripheral section configured in the shape of a cylinder, cone or truncated cone; and
(b) programming of the at least one thermoplastic polymer with shape-memory properties, in that the gear wheel
- is deformed from the permanent shape of a toothed or worm wheel into the temporary shape with at least one peripheral section configured in the shape of a cylinder, cone or truncated cone, or
- is deformed from the permanent shape with at least one peripheral section configured in the shape of a cylinder, cone or truncated cone into the temporary shape of a toothed or worm wheel.

13. Process according to Claim 12, **characterized in that** the gear wheel is provided according to step (a) **in that** the at least one thermoplastic polymer with shape-memory properties is plastified and the gear wheel in its permanent shape is produced by means of thermoplastic processing methods, in particular from the group of injection moulding, hot press moulding, extrusion and melt-layer application.

14. Process according to Claim 12 or 13, **characterized in that** the gear wheel is programmed according to step (b) **in that**, from the permanent shape, it
- is subjected to low-temperature deformation into the temporary shape at a temperature below the switching temperature of the at least one thermoplastic polymer with shape-memory properties; or
- it is subjected to deformation at elevated temperature at a temperature which at least corresponds to the switching temperature of the at least one thermoplastic polymer with shape-memory properties, and then is cooled at least to the shape-fixing temperature of the thermoplastic polymer with shape-memory properties.

15. Process according to any of Claims 12 to 14, **characterized in that** according to step (b) the gear wheel
- is deformed by means of at least one shaping roll which is complementary to the temporary shape of the gear wheel and which is pressed against the gear wheel in the permanent shape, where the shaping roll in particular is temperature-controlled; or
- is introduced into a mould complementary to the temporary shape of the gear wheel and subjected to an internal pressure in order to press the gear wheel in the permanent shape against the mould and to convert the gear wheel to the temporary shape, where the mould and/or a pressurized fluid providing the internal pressure is/are in particular temperature-controlled.

## Revendications

1. Roue d'engrenage, formée au moins dans sa zone de périphérie à partir d'au moins un polymère plastifiable, l'au moins un polymère plastifiable étant au moins un polymère thermoplastique à propriétés de mémoire de forme et comportant des segments souples et des points de liaison les reliant entre eux, le polymère à propriétés de mémoire de forme pouvant être programmé par déformation d'une forme permanente jusque dans une forme temporaire et pouvant être ramené de la forme temporaire jusque dans sa forme permanente par réchauffement au moins à la température de contact ; et **caractérisée en ce que** le polymère est programmé de telle sorte que la roue d'engrenage :
- présente la forme permanente d'une roue dentée ou hélicoïdale et possède dans la forme temporaire une section périphérique configurée au moins en forme de cylindre, de cône ou de tronc de cône ; ou
- possède dans la forme permanente au moins une section périphérique configurée en forme de cylindre, de cône ou de tronc de cône et prend la forme temporaire d'une roue dentée ou hélicoïdale.

2. Roue d'engrenage selon la revendication 1, **caractérisée en ce que** l'au moins un polymère thermoplastique à propriétés de mémoire de forme de la roue d'engrenage présente des propriétés de réponse thermique.

3. Roue d'engrenage selon la revendication 1 ou 2, **caractérisée en ce qu'**elle est :
- formée pour l'essentiel entièrement à partir de l'au moins un polymère thermoplastique présentant des propriétés de mémoire de forme ; ou
- formée du côté périphérique à partir d'au moins un polymère thermoplastique à propriétés de mémoire de forme ou en est revêtue, notamment sous forme d'une monocouche.

4. Roue d'engrenage selon l'une quelconque des revendications 1 à 3, **caractérisée en ce qu'**elle prend la forme d'au moins un polymère thermoplastique à propriétés de mémoire de forme présentant des propriétés de mémoire de forme bidirectionnelle, et dont les segments de contact connaissent un changement de forme lors de la transition entre leur état surtout cristallin et leur état surtout amorphe, de sorte que la roue d'engrenage puisse être amenée ou ramenée d'une part, par refroidissement du polymère, à la température de cristallisation, d'autre part, par réchauffement du polymère, dans la zone de température de contact, de façon réversible entre :
- la forme d'une roue dentée ou hélicoïdale et la forme temporaire avec au moins une section périphérique configurée en forme de cylindre, de cône ou de tronc de cône ; ou
- la forme avec au moins une section périphérique configurée en forme de cylindre, de cône ou de tronc de cône et la forme temporaire d'une roue dentée ou hélicoïdale.

5. Roue d'engrenage selon l'une quelconque des revendications 1 à 4, **caractérisée en ce qu'**elle est formée au moins en partie à partir de matériaux électriquement conducteurs et/ou à réponse magnétique, notamment dans le groupe des métaux et des liaisons métalliques dont leurs alliages et oxydes, par exemple le carbone.

6. Roue d'engrenage selon la revendication 5, **caractérisée en ce qu'**elle :
- comporte un noyau de matériaux électriquement conducteurs et/ou à réponse magnétique ; et/ou
- contient l'au moins un polymère thermoplastique avec des matériaux de renforcement ou de remplissage à propriétés de mémoire de forme dont les matériaux sont électriquement conducteurs et/ou à réponse magnétique.

7. Engrenage avec au moins une roue d'engrenage selon l'une quelconque des revendications 1 à 6.

8. Engrenage selon la revendication 7, **caractérisé en ce qu'**il comporte au moins une roue dentée et/ou hélicoïdale supplémentaire qui :
- est en prise avec la forme permanente de la roue d'engrenage prenant la forme d'une roue dentée ou hélicoïdale tandis qu'il est hors de prise dans la forme temporaire de la roue d'engrenage avec au moins une section périphérique configurée en forme de cylindre, de cône ou de tronc de cône ; ou
- est hors de prise, avec la forme permanente de la roue d'engrenage, avec au moins une section périphérique configurée en forme de cylindre, de cône ou de tronc de cône tandis qu'il est en prise avec la forme temporaire de la roue d'engrenage sous la forme d'une roue dentée ou hélicoïdale.

9. Engrenage selon la revendication 7 ou 8, **caractérisé en ce qu'**un dispositif de mise à tempérage notamment électrique, inductif ou convectif est associé à la roue d'engrenage.

10. Engrenage selon l'une quelconque des revendications 7 à 9, **caractérisé en ce qu'**un dispositif de déformation est associé à la roue d'engrenage.

11. Engrenage selon la revendication 10, **caractérisé en ce que** le dispositif de déformation comporte au moins :
- un cylindre moulé complémentaire à la surface périphérique non dentée de la roue d'engrenage dans sa forme temporaire avec au moins une section périphérique configurée en forme de cylindre, de cône ou de tronc de cône ; et/ou
- un cylindre moulé complémentaire à la surface périphérique dentée de la roue d'engrenage dans sa forme temporaire d'une roue dentée ou hélicoïdale qui peut être comprimé contre la roue d'engrenage, le cylindre moulé pouvant notamment être mis à température.

12. Procédé de fabrication d'une roue d'engrenage selon l'une quelconque des revendications 1 à 6, comprenant les étapes suivantes :
(a) mise à disposition de la roue d'engrenage :
- sous la forme permanente d'une roue dentée ou hélicoïdale ; ou
- sous la forme permanente avec au moins une section périphérique configurée en forme de cylindre, de cône ou de tronc de cône ; et
(b) programmation de l'au moins un polymère thermoplastique avec des propriétés de mémoire de forme en déformant la roue d'engrenage :
- depuis la forme permanente d'une roue dentée ou hélicoïdale jusque dans la forme temporaire avec au moins une section périphérique configurée en forme de cylindre, de cône ou de tronc de cône ; ou
- depuis la forme permanente avec au moins une section périphérique configurée en forme de cylindre, de cône ou de tronc de cône jusque dans la forme temporaire d'une roue dentée ou hélicoïdale.

13. Procédé selon la revendication 12, **caractérisé en ce que** la roue d'engrenage selon l'étape (a) est préparée en plastifiant l'au moins un polymère thermoplastique à propriétés de mémoire de forme et en produisant la roue d'engrenage dans sa forme permanente par le biais d'un traitement thermoplastique, notamment à partir du groupe composé du moulage par injection, du pressage à chaud, de l'extrusion et des couches de fusion.

14. Procédé selon la revendication 12 ou 13, **caractérisé en ce que** la roue d'engrenage selon l'étape (b) est programmée :
- en étant refroidie dans la forme temporaire, depuis la forme permanente, à une température inférieure à la température de contact de l'au moins un polymère thermoplastique à propriétés de mémoire de forme ; ou
- en étant déformée à chaud à une température correspondant au moins à la température de contact de l'au moins un polymère thermoplastique à propriétés de mémoire de forme après quoi elle est refroidie au moins à la température de fixation de forme du polymère thermoplastique à propriétés de mémoire de forme.

15. Procédé selon l'une quelconque des revendications 12 à 14, **caractérisé en ce que** la roue d'engrenage selon l'étape (b) :
- est déformée à l'aide d'au moins un cylindre moulé complémentaire à la forme temporaire de la roue d'engrenage comprimé contre la roue d'engrenage dans la forme permanente, le cylindre moulé étant notamment mis à température ; ou
- est amenée dans un outil de forme complémentaire à la forme temporaire de la roue d'engrenage et sollicitée avec une pression intérieure pour comprimer la roue d'engrenage dans la forme permanente contre l'outil de formage et pour l'amener dans la forme temporaire, l'outil de formage et/ou un fluide sous pression occasionnant la pression intérieure étant notamment tempérés.
